# EUROPÄISCHE PATENTSCHRIFT

(11) **EP 2 407 724 B1**
(45) Veröffentlichungstag und Bekanntmachung des Hinweises auf die Patenterteilung: **10.04.2019**
(21) Anmeldenummer: 11173787.0
(22) Anmeldetag: 13.07.2011
(51) Int. Cl.: F24D 19/00, F24D 3/10, C02F 1/42, F24H 9/12, C02F 1/66

(54) **Befüllarmatur zur Befüllung einer Heizungsanlage**
Filling fitting for filling a heating assembly
Armature de remplissage d'une installation de chauffage

(30) Priorität: 14.07.2010 DE 202010008046 U
(43) Veröffentlichungstag der Anmeldung: 18.01.2012
(73) Patentinhaber: Perma-Trade Wassertechnik GMBH, 71229 Leonberg (DE)
(72) Erfinder: Saulter, Michael, 71229 Leonberg (DE); Ende, Dietmar, Dr., 71287 Weissach (DE)
(74) Vertreter: Herrmann, Jochen

(56) Entgegenhaltungen:
- EP-A2- 1 247 909
- EP-A2- 1 855 061
- EP-A2- 2 077 422
- FR-A- 1 205 037

## Beschreibung

Die Erfindung betrifft eine Befüllarmatur zur Befüllung einer Heizungsanlage mit Prozesswasser gemäß dem Oberbegriff des Anspruchs 1.

Solche Befüllarmaturen werden in Kombination mit Wasserbehandlungs-Patronen zur Befüllung von Heizungsanlagen mit entmineralisiertem Wasser verwendet. Dabei wird die Befüllarmatur an einen Frischwasseranschluss angeschlossen. Das Frischwasser wird über die Befüllarmatur in einen Behandlungsraum einer Wasserbehandlungs-Patrone eingeleitet. Dort wird das Wasser entmineralisiert und ggf. in seinem PH-Wert stabilisiert. Anschließend fließt das behandelte Wasser durch einen Ablauf in die zu befüllende Heizungsanlage. Der Anschluss zur Heizungsanlage wird üblicherweise über eine Schlauchverbindung hergestellt. Die Befüllarmatur weist ein Gewinde auf, auf das ein Gegengewinde der Wasserbehandlungs-Patrone aufgeschraubt werden kann. Auf diese Weise wird eine feste und dichte Zuordnung der Wasserbehandlungs-Patrone zu der Befüllarmatur hergestellt. Üblicherweise wird dieses System zur Nachbefüllung von Heizungsanlagen verwendet, um den üblichen Wasserverlust auszugleichen. Weiterhin kann die Befüllarmatur auch zur Erstbefüllung von Heizungsanlagen verwendet werden. Dabei ist allerdings die Behandlungskapazität der Wasserbehandlungs-Patrone beschränkt, sodass insbesondere große Heizungsanlagen nicht alleine mit einer Wasserbehandlungs-Patrone befüllt werden können. Vielmehr ist ein Patronenwechsel erforderlich.

Eine Befüllarmatur der gattungsgemäßen Art ist bspw. aus der EP 1 247 909 A2 bekannt. Eine ähnliche Befüllarmatur kann zudem der EP 1 855 061 A2 entnommen werden.

Es ist Aufgabe der Erfindung, eine Befüllarmatur der eingangs erwähnten Art bereitzustellen, mit der sich auf einfache Weise eine Nachbefüllung einer bestehenden Heizungsanlage sowie eine Erstbefüllung von kleinen und großen Heizungsanlagen einfach und mit vielfältigen Befüllmöglichkeiten verwirklichen lässt.

Diese Aufgabe wird durch eine Befüllarmatur mit den Merkmalen des Anspruchs 1 gelöst. Insbesondere ist am Patronenanschluss wahlweise die Wasserbehandlungs-Patrone oder der Adapter ankoppelbar, wobei der Adapter zwei Anschlussleitungen aufweist, die in fluidleitender Verbindung mit dem Zulauf und dem Ablauf der Anschlussarmatur stehen, und die Anschlussleitungen des Adapters eine Koppelstelle für einen Schlauchanschluss oder dergleichen aufweisen.

Der Anwender hat nun die Möglichkeit, die bekannte Befüllarmatur wahlweise mit einer Wasserbehandlungs-Patrone oder mit dem Adapter auszurüsten. Wenn er den Adapter verwendet, so kann an den Schlauchanschlüssen oder dergleichen Leitungsanschlüsse eine externe Standpatrone angeschlossen werden. Somit kann die Heizungsanlage einfach und kostengünstig erstbefüllt werden. Anschließend kann die wesentlich kleinere Wasserbehandlungs-Patrone zur Nachspeisung angeschraubt werden.

Gemäß einer bevorzugten Ausgestaltungsvariante der Erfindung kann es vorgesehen sein, dass der Patronenanschluss ein Gewinde aufweist, das sowohl zur Ankopplung eines Gegengewindes der Wasserbehandlungs-Patrone als auch des Adapters ausgeführt ist: Auf diese Weise wird eine einheitliche Schnittstelle zur Verfügung gestellt, die einen schnellen und zuverlässigen Systemwechsel ermöglicht.

Um eine schnelle und einfach Ankopplung der Anschlussleitungen des Adapters an die korrespondierenden wasserführenden Bereiche der Anschlussarmatur gelingt auf einfache Weise dadurch, dass der Adapter an seinen Anschlussleitungen Stutzenansätze und/oder Steckaufnahmen aufweist und dass die Stutzenansätze in Steckaufnahmen und/oder die Steckaufnahmen auf Stutzenansätze des zugeordneten Leitungsbereichs der Anschlussarmatur abgedichtet ein- bzw. aufgesetzt sind. Die Stutzenansätze und die Steckaufnahmen können durch eine einfache Steckbewegung ineinandergefügt werden. Diese Steckbewegung kann bspw. dadurch realisiert werden, dass der Adapter auf die Anschlussarmatur aufgeschraubt wird. Eine einfache Konstruktion ergibt sich dann für den Adapter, wenn vorgesehen ist, dass die Anschlussleitungen Gewindeaufnahmen aufweisen, in die Schlauchanschluss-Nippel eingeschraubt sind. Derartige Schlauchanschluss-Nippel sind als Normteile kostengünstig beziehbar.

Wenn vorgesehen ist, dass die Schlauchanschlüsse zueinander winklig versetzt angeordnet sind, dann sind sie zum Einen aufgrund ihres Versatzes gut zugänglich und die Schläuche können einfach angeschlossen werden. Zudem wird für den Benutzer optisch die Unterscheidung zwischen Zu- und Ablauf einfacher möglich. Besonders bevorzugt sind die Schlauchanschlüsse um 90° zueinander versetzt.

Die Erfindung wird im Folgenden anhand eines in den Zeichnungen dargestellten Ausführungsbeispiels näher erläutert. Es zeigen:
Figur 1 eine Befüllarmatur mit einer daran angekoppelten Wasserbehandlungs-Patrone in Seitenansicht;
Figur 2 die in Figur 1 gezeigte Einheit längs des in Figur 1 mit II-II markierten Schnittverlaufes;
Figur 3 ein in der Figur 2 mit III markiertes Detail in vergrößerter Ansicht;
Figur 4 die in den Figuren 1 bis 3 gezeigte Befüllarmatur mit einem angeschlossenen Adapter in Ansicht von links; und
Figur 5 einen in Figur 4 mit V-V markierten Schnittverlauf.

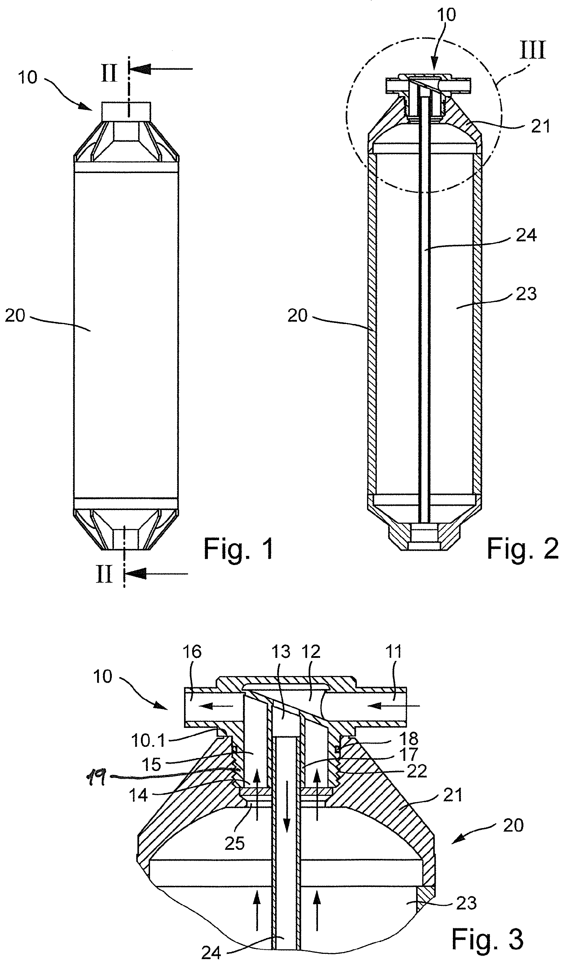

Figur 1 zeigt eine Wasserbehandlungs-Patrone 20, die an eine Anschlussarmatur 10 angeschraubt ist.

Wie Figur 2 erkennen lässt, besitzt die Wasserbehandlungs-Patrone 20 einen zylindrischen Hohlkörper, der mit einem Anschlusskopf 21 abgeschlossen ist. Der zylindrische Hohlkörper umgibt einen Behandlungsraum 23, in dem lonentauscherelemente, insbesondere lonentauscherharze, bevorratet sind.

Der Figur 3 lässt sich die Gestaltung der Wasserbehandlungs-Patrone 20 im Kopfbereich näher entnehmen. Wie diese Darstellung erkennen lässt, ist in die Wasserbehandlungs-Patrone 20 ein Rohr 24 eingestellt, das über seinen Umfang perforiert ist. Das Rohr 24 ist von den lonentauscherelementen im Behandlungsraum 23 umgeben. Der Anschlusskopf 21 weist ein Gewinde 22, nämlich ein Innengewinde auf, in das ein Außengewinde der Anschlussarmatur 10 angeschraubt ist. Das Rohr 24 ragt koaxial in den von dem Gewinde 22 umschlossenen Bereich und steht nicht über die Außenkontur des Anschlusskopfes 21 vor, sodass es vor mechanischen Beanspruchungen geschützt ist. Um das Rohr 24 herum erstreckt sich ein ringförmiger Durchbruch, der als Auslass 25 dient. Der Auslass 25 steht in leitender Verbindung mit dem Behandlungsraum 23.

Wie bereits vorstehend erwähnt wurde, kann in das Gewinde 22 die Anschlussarmatur 10 mit einem Außengewinde eingeschraubt werden. Die Anschlussarmatur 10 ist als Gussteil ausgebildet und weist einen rohrförmigen Zulauf 11 sowie einen rohrförmigen Ablauf 16 auf. Der Zulauf 11 geht über einen Umlenkbereich 12 in eine Anschlussleitung 13 über. Der Ablauf 16 steht mit einer Ringleitung 15 in fluidleitender Verbindung. Wenn die Wasserbehandlungs-Patrone 20 auf die Anschlussarmatur 10 aufgeschraubt wird, so schiebt sich das als Stutzenansatz ausgebildete Ende des Rohrs 24 in die korrespondierende Stutzenaufnahme der Anschlussleitung 13 ein. Weiterhin schiebt sich der die Ringleitung 15 umgebende an das Außengewinde anschließende Stutzenansatz der Anschlussarmatur 10 in die hohlzylindrische Aufnahme der Wasserbehandlungs-Patrone 20, die als Stutzenaufnahme ausgebildet ist, ein. Die Aufschraubbewegung der Anschlussarmatur 10 auf die Wasserbehandlungs-Patrone 20 wird mittels eines Anschlages 10.1 begrenzt. Dieser schlägt an der Oberseite des Anschlusskopfes 21 an. Im montierten Zustand wird im Bereich des Gewindes 22 eine Dichtung 18 wirksam, die den Behandlungsraum 23 gegenüber der Umgebung abdichtet. Weiterhin ist zwischen dem Rohr 24 und der Anschlussleitung 13 eine Dichtung angeordnet, die eine Vermischung von unbehandeltem und behandeltem Wasser verhindert.

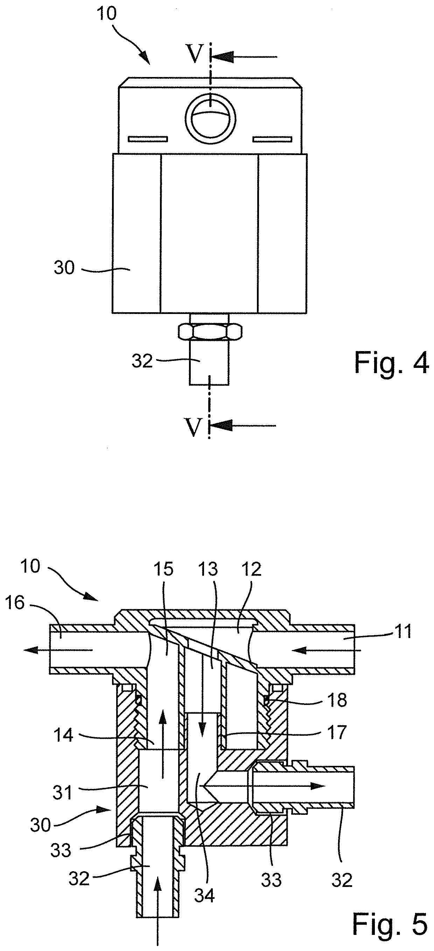

Die in der Figur 3 gezeigte Anordnung wird üblicherweise zur Befüllung von Klein-Heizungsanlagen oder besonders bevorzugt als Nachfüllarmatur eingesetzt. Dabei wird der Wasserverlust in einer Heizungsanlage mit dem durch die Wasserbehandlungs-Patrone 20 nachgespeisten Wasser ausgeglichen. Wenn nun eine Heizungsanlage erstbefüllt werden soll, so kann bei großem Wasservolumen in der Heizungsanlage die Behandlungskapazität der in den Figuren 1 bis 3 gezeigten Wasserbehandlungs-Patrone 20 mitunter nicht ausreichen. Dann wird eine externe Standpatrone benötigt, die eine größere Behandlungskapazität zur Verfügung stellt. Für den Anschluss dieser externen Standpatrone wird die in den Figuren 4 und 5 gezeigte Konfiguration einer Befüllarmatur eingesetzt.

Hierbei wird ein Adapter 30 auf die Anschlussarmatur 10 aufgeschraubt. Der Adapter 30 weist dazu ein Innengewinde auf, mit dem er auf das Gewinde, das von dem Patronenanschluss 19 zur Verfügung gestellt wird, aufgeschraubt. Der Anschlussadapter 30 weist Anschlussleitungen 31, 34 auf, die endseitig mit Gewindeaufnahmen 33 ausgestattet sind. In diese Gewindeaufnahmen 33 sind Schlauchanschlüsse 32, die vorliegend als Gewindemittel ausgebildet sind, eingeschraubt. Die Schlauchanschlüsse 32 weisen einen zylindrischen Rohrstutzen auf, an dem ein Schlauch aufgeschoben und mit einer Schelle fixiert werden kann. Die Anschlussleitung 31 steht mit der Ringleitung 15 in fluidleitender Verbindung. Die Anschlussleitung 34 steht mit der Anschlussleitung 13 der Anschlussarmatur 10 in fluidleitender Verbindung.

Ähnlich, wie bei der Wasserbehandlungs-Patrone 20, ragt ein Stutzenansatz der Anschlussleitung 34 in die Stutzenaufnahme der Anschlussleitung 13. Ein Stutzenansatz, der im Bereich der Durchtrittsöffnung 14 ringförmig umläuft, greift in eine Stutzenaufnahme des Adapters 30, die als hohlzylindrische Ausnehmung ausgebildet ist, ein.

Über die beiden Schlauchanschlüsse 32 kann die externe Standpatrone unter Verwendung von Schläuchen angeschlossen werden. Für die Befüllung der Heizungsanlage wird er Zulauf 11 mit einem Frischwasseranschluss verbunden. Der Ablauf 16 wird mit der zu befüllenden Heizungsanlage verbunden. Das Frischwasser strömt durch den Zulauf 11 und über den Umlenkbereich 12 in den Bereich der Anschlussleitung 13. Von hier gelangt das Frischwasser durch die Anschlussleitung 34 und den Schlauchanschluss 32 sowie dem zugehörigen Schlauch in die externe Standpatrone. Das Frischwasser durchströmt die Standpatrone und wird darin entmineralisiert. Nach der erfolgten Behandlung verlässt das entmineralisierte Prozesswasser die externe Standpatrone und gelangt durch den Schlauch, den Schlauchanschluss 32 und die Anschlussleitung 31 in die Ringleitung 15. Anschließend strömt das Prozesswasser durch den Ablauf 16 in die Heizungsanlage. Vorteilhafterweise kann mit der Verwendung des Anschlussadapters 30 eine Mess- und Regelarmatur (z. Bsp. Wasserzähler, Druckminderer, Leitwertmesser und/oder Systemtrenner), die an die Anschlussarmatur 10 angekoppelt ist, für die externe Standpatrone nutzbar gemacht werden.

Wenn die Heizungsanlage fertig befüllt ist, wird der Adapter 30 abgenommen und gegen eine für die Nachspeisung geeignete Wasserbehandlungs-Patrone 20 ausgetauscht.

## Patentansprüche

1. Befüllarmatur zur Befüllung einer Heizungsanlage mit Prozesswasser, mit einer Anschlussarmatur (10), einem Adapter (30) und einer Wasserbehandlungs-Patrone (20), wobei die Anschlussarmatur (10) einen Zulauf (11) und einen Ablauf (16) und einen Patronenanschluss (19) zum auswechselbaren Ankoppeln der Wasserbehandlungs-Patrone (20) aufweist, **dadurch gekennzeichnet,**
**dass** am Patronenanschluss (19) wahlweise die Wasserbehandlungs-Patrone (20) oder der Adapter (30) ankoppelbar ist,
**dass** der Adapter (30) zwei Anschlussleitungen (31, 34) aufweist, die in fluidleitender Verbindung mit dem Zulauf (11) und dem Ablauf (16) stehen, und
**dass** die Anschlussleitungen (31, 34) des Adapters (30) eine Koppelstelle für einen Schlauchanschluss (32) oder dergleichen aufweisen.

2. Befüllarmatur nach Anspruch 1,
**dadurch gekennzeichnet,**
**dass** der Patronenanschluss (19) ein Gewinde (22) aufweist, das sowohl zur Ankopplung eines Gegengewindes der Wasserbehandlungs-Patrone (20) als auch des Adapters (30) ausgeführt ist.

3. Befüllarmatur nach Anspruch 1 oder 2,
**dadurch gekennzeichnet,**
**dass** der Adapter (30) an seinen Anschlussleitungen (31, 34) Stutzenansätze und/oder Steckaufnahmen aufweist, und dass die Stutzenansätze in Steckaufnahmen und/oder die Steckaufnahmen in Stutzenansätze des zugeordneten Leitungsbereichs der Anschlussarmatur (10) abgedichtet ein- bzw. aufgesetzt sind.

4. Befüllarmatur nach einem der Ansprüche 1 bis 3,
**dadurch gekennzeichnet,**
**dass** die Anschlussleitungen (31) Gewindeaufnahmen (33) aufweisen, in die Schlauchanschluss-Nippel (32) eingeschraubt sind.

5. Befüllarmatur nach einem der Ansprüche 1 bis 4,
**dadurch gekennzeichnet,**
**dass** die Schlauchanschlüsse (32) zueinander winklig versetzt angeordnet sind.

## Claims

1. A filling fitting for filling a heating assembly with process water, comprising a connection fitting (10), an adapter (30), and a water treatment cartridge (20), wherein the connection fitting (10) has an inlet (11) and an outlet (16) and a cartridge connector (19) for exchangeable coupling of the water treatment cartridge (20),
**characterised in that**
the water treatment cartridge (20) or the adapter (30) can be coupled selectively to the cartridge connector (19),
**in that** the adapter (30) has two connection lines (31, 34), which are fluidically connected to the inlet (11) and the outlet (16),
and
**in that** the connection lines (31, 34) of the adapter (30) have a coupling point for a hose connector (32) or the like.

2. The filling fitting according to claim 1,
**characterised in that**
the cartridge connector (19) has a thread (22), which is designed both for coupling of a mating thread of the water treatment cartridge (20) and of the adapter (30).

3. The filling fitting according to claim 1 or 2,
**characterised in that**
the adapter (30) has nozzle necks and/or receptacles on its connection lines (31, 34), and **in that** the nozzle necks are fitted into receptacles in a sealed manner and/or the receptacles are fitted over nozzle necks of the associated line region of the connection fitting (10) in a sealed manner.

4. The filling fitting according to one of the claims 1 to 3,
**characterised in that**
the connection lines (31) have thread receptacles (33), into which the hose connector nipples (32) are screwed.

5. The filling fitting according to one of the claims 1 to 4,
**characterised in that**
the tube connectors (32) are arranged angularly offset from one another.

## Revendications

1. Armature de remplissage d'une installation de chauffage avec de l'eau de traitement, comprenant une armature de raccordement (10), un adaptateur (30) et une cartouche de traitement de l'eau (20), l'armature de raccordement (10) présentant une arrivée (11) et une évacuation (16) et un raccord de cartouche (19) pour un raccordement interchangeable de la cartouche de traitement de l'eau (20),
**caractérisée en ce**
**qu'**il est possible de raccorder sélectivement la cartouche de traitement de l'eau (20) ou l'adaptateur (30) au raccord de cartouche (19),
**que** l'adaptateur (30) présente deux conduites de raccordement (31, 34) qui sont en communication fluidique avec l'arrivée (11) et l'évacuation (16),
et en ce
**que** les conduites de raccordement (31, 34) de l'adaptateur (30) présentent un point de couplage pour un raccord de tuyau (32) ou analogue.

2. Armature de remplissage selon la revendication 1,
**caractérisée en ce**
**que** le raccord de cartouche (19) présente un filetage (22) qui sert aussi bien à raccorder un contre-filetage de la cartouche de traitement de l'eau (20) que l'adaptateur (30).

3. Armature de remplissage selon la revendication 1 ou 2,
caractérisée en ce
l'adaptateur (30) présente sur ses conduites de raccordement (31, 34) des embouts de tubulure et/ou des logements à emboîtement et en ce que les embouts de tubulure sont insérés ou montés de manière étanche dans les logements à emboîtement et/ou les logements à emboîtement sont insérés ou montés de manière étanche dans les embouts de tubulure de la zone de conduite concernée de l'armature de raccordement (10).

4. Armature de remplissage selon l'une des revendications 1 à 3,
caractérisée en ce
les conduites de raccordement (31) présentent des logements filetés (33) dans lesquels viennent se visser les raccords de tuyau (32).

5. Armature de remplissage selon l'une des revendications 1 à 4,
caractérisée en ce
les raccords de tuyau (32) sont décalés angulairement les uns par rapport aux autres.
